# EUROPEAN PATENT SPECIFICATION

(11) **EP 3 959 993 B1**
(45) Date of publication and mention of the grant of the patent: **14.12.2022**
(21) Application number: 20192328.1
(22) Date of filing: 24.08.2020
(51) Int. Cl.: B01D 15/38, A23L 5/20, A23L 27/10, B01D 53/04, B01D 15/26, B01D 53/02

(54) **METHOD FOR SOLVENT FREE PRODUCTION OF AROMA CONCENTRATES**
VERFAHREN ZUR LÖSUNGSMITTELFREIEN HERSTELLUNG VON AROMAKONZENTRATEN
PROCÉDÉ DE PRODUCTION DE CONCENTRÉS D'ARÔMES SANS SOLVANT

(43) Date of publication of application: 02.03.2022
(73) Proprietor: Symrise AG, 37603 Holzminden Niedersachsen (DE)
(72) Inventor: BRENNECKE, Stefan, 37620 Halle (DE); KIEFL, Johannes, 91413 Neustadt an der Aisch (DE); HEINEMEIER, Martin, 37671 Höxter (DE); LANGNER, Tanja, 37671 Höxter (DE); UTERMÖHLE, Claudia, 37170 Uslar (DE)
(74) Representative: Eisenführ Speiser

(56) References cited:
- WO-A1-2015/104357
- DE-A1- 2 631 225
- DE-A1- 3 030 967

## Description

The present invention relates to a method for producing an aroma concentrate of a liquid composition, comprising one or more aromatic substance(s).

Further aspects of the present invention or in connection therewith as well as preferred embodiments will be described below as well as in the attached claims.

Aromatizing foodstuff of any kind has become ever-present and is made use of for decades. Adding aromatic substances to any kind of foodstuff can have several reasons, such as compensating for loss of aromatic substances during production, storage and preparation of the foodstuff, or for imparting a particular taste to a foodstuff. Without aromatization, the plenty of today's foodstuffs could not be imagined and furthermore, adding aromatic substances to foodstuff enables consistent taste impressions of specific products over time.

As many regulations such as food law or consumer protection require that synthetically obtained aromatic substances as well as excipients added during its production have to be indicated on a product on a certain level, and as an increasing amount of consumers prefers products with only little amounts of indicated "chemical" ingredients, the use of natural aromatic substances and their production with only minor amounts of different excipients becomes more and more important in the food industry.

For the permission to label a product with terms such as "natural", "bio", "organic" or the like, only a limited amount of excipients can be used in the process to obtain aromatic substances, thus, increasing the technical requirements to obtain natural aromatic substances. Typically, the source of natural aromatic substances are natural products such as (parts of) plants, fruits or vegetables.

Mostly, such natural products only contain a low concentration of such aromatic substances to be isolated. Therefore, it is of particular importance that a high proportion of the contained aromatic substances is yielded, advantageously without a solvent and without complex processes. It is even further desirable if processes for isolating such aromatic substances can be standardized for a variety of applications.

The extraction of raw materials with supercritical carbon dioxide is the standard process for obtaining aroma oils. A particular relevance on an industrial level is particularly found in extracts of solid raw materials such as bark, roots, rhizomes, leaves, blossoms and fruits, all of which already have a high concentration of aromatic substances, which may be in the range of several percent.

The extraction of aromatic substances from liquid raw materials by means of supercritical carbon dioxide is of minor importance in the food industry, as this method is very complex and thus very cost-intensive. Furthermore, in such liquid compositions, the concentration of aromatic substances is rather low, as the liquid (e.g. water) usually amounts for a high proportion of the composition. It is thus more complex to yield a high amount of aromatic substances from such a raw material.

Therefore, a high need exists for simple and thus less expensive methods for obtaining aromatic substances in a high amount from liquid raw materials.

The primary object of the present invention was thus to provide an improved method for obtaining aromatic substances from liquid and gaseous raw materials. Further objects underlying the present invention become apparent when studying the following description, including examples and the advantageous effects mentioned therein.

The primary object of the present invention is achieved by a method for producing an aroma concentrate of a liquid or gaseous composition, comprising one or more aromatic substance(s), comprising or consisting of the following steps:
a) providing a liquid or gaseous composition, comprising one or more aromatic substance(s),
b) adding the liquid or gaseous composition provided in step a) to an adsorbent for adsorbing the, one, more or all of the one or more aromatic substance(s) of the liquid composition,
   wherein the adsorbent comprises or consists of adsorber resin, such as polystyrene cross-linked with divinyl benzene, macroporous polystyrene cross-linked with divinyl benzene, polystyrene, cross-linked polystyrene, aliphatic methylacrylate, microporous adsorber based on carbon, or a combination thereof,
c) recovering the, one, more or all of the adsorbed one or more aromatic substance(s) from the adsorbent by thermal desorption,
   wherein the thermal desorption comprises a step of applying water steam to the adsorbent, preferably with a water steam flux of up to 50 g/min based on a 2.0 L column, further preferably with a water steam flux of up to 20 g/min based on a 2.0 L column,
   wherein the adsorbent is heated to a temperature in the range of from 110 °C to 170 °C before the water steam is applied,
d) condensing the water steam applied in step c) to obtain an aroma concentrate comprising the, one, more or all of the one or more aromatic substance(s),
wherein the aroma concentrate comprises a water phase and an oil phase, comprising the, one, more or all of the one or more aromatic substance(s).

The term "thermal desorption" describes a principle well known to a skilled person and involves collecting volatile organic compounds onto a sorbent, and then heating this sorbent in a flow of gas to release the compounds and concentrate them into a smaller volume.

It has been surprisingly found that the method according to the invention results in an aroma concentrate, which has two different phases, a water phase and an oil phase. As many aromatic substances are water insoluble or sparingly soluble in water, the presence of a (separate) oil phase - including many aromatic substances - indicates a large concentration of aromatic substances in the obtained aroma concentrate. On the contrary, the experiments with a different absorber material did not provide an aroma concentrate with two separate phases (see Example 1 below). This indicates that the concentration of the aromatic substances in said sample is not high enough to form a (separate) oil phase. The method according to the invention thus provides aroma concentrates with particularly high amounts of aromatic substances. Typically, the oil phase obtained by a method according to the invention comprises mostly nonpolar and medium-polar aromatic substances.

It is preferred that the liquid or gaseous composition provided in step a) is of plant, animal or fungal origin or a combination of compositions of plant and/or animal and/or fungal origin.

As an example, a liquid or gaseous composition as described herein may be selected for example from fruits, herbs, spices, vegetables, and meat aqueous extracts or enzymatically treated / fermented organic products.

Typically, the adsorbent is contained in a column particularly constructed for the intended purpose and well known in the state of the art. The column size is usually indicated by its volume. A column, which may be used in a method according to the invention, may be of any size, as an example, a column with a size of 2 L may be used. Preferably, the setup to be used for a method according to the invention includes one or more columns, wherein in case more than one column is used, these columns may have the same or a different size. The columns may be used simultaneously or subsequently in a method according to the invention.

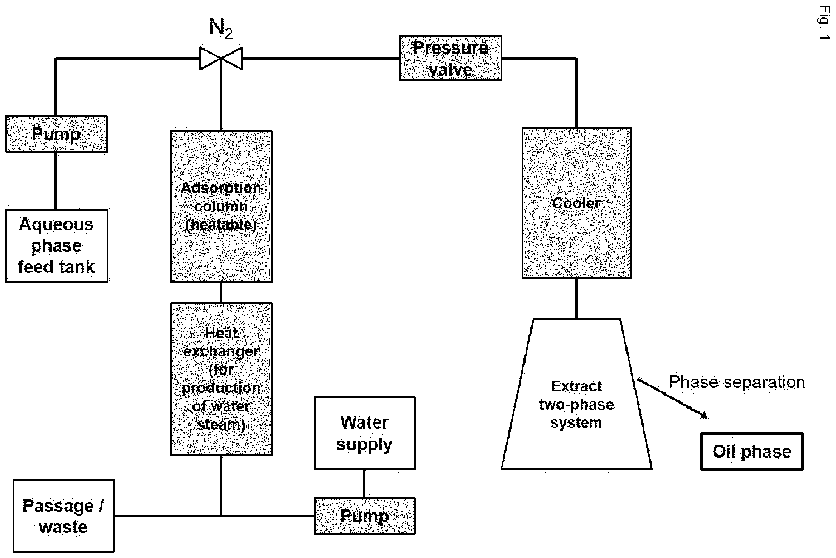

An exemplary experimental setup to be used for a method according to the invention is shown in Fig. 1.

The adsorption of aromatic substances to adsorber resins for enriching such aromatic substances is described in EP 2075320.

Using supercritical water steam for cleaning and regenerating the adsorbent activated carbon is described in DE3030967.

WO 2015/104357 describes the desorption of adsorber resins with water steam for obtaining an aroma concentrate. However, the precise process parameters (e.g. temperature or water steam flux) are not indicated. As a result, the obtained sample only represents 3 to 30 wt.-% of the original beverage and the presence of an oil phase is not described. Additionally, the enrichment factor of 3 to 30 is not sufficient in case the sample shall be further processed by distillation for standardizing the process. It would be ideal for this case to obtain a sample, which is reduced or substantially free of water or further solvents, i.e. an oil phase.

Thus, preferably, in the method according to the invention the aroma concentrate comprises a water phase and an oil phase, comprising the, one, more or all of the one or more aromatic substance(s), wherein the method further comprises the step
e) separating the oil phase to obtain an aroma oil comprising the, one, more or all of the one or more aromatic substance(s).

The separation of an oil and a water phase may as an example be performed using a separating funnel.

An important advantage of obtaining such an oil phase is that - compared to aqueous concentrates or concentrates containing solvents - the oil phases are more stable and do not form acetals and can be applied to both, aqueous and oily systems.

As no solvent needs to be applied in the method according to the invention, the obtained aroma concentrates cannot exceed the legal limits of solvent concentrations.

Furthermore, the obtained aroma concentrates can be declared as halal, kosher and/or FTNF (from the named fruit).

As an example, the adsorbent may be selected from the following list, wherein the adsorbents with corresponding names (exemplary adsorbent) but different numbers may differ in e.g. pore diameter, pore volume and/or surface area from each other:

| **Material** | **Exemplary adsorbent¹** | **Manufacturer** |
|---|---|---|
| Polystyrene cross-linked with divinyl benzene | Purosorb PAD 350 | Purolite |
| Polystyrene cross-linked with divinyl benzene | Purosorb PAD 400 | Purolite |
| Polystyrene cross-linked with divinyl benzene | Purosorb PAD 550 | Purolite |
| Polystyrene cross-linked with divinyl benzene | Purosorb PAD 600 | Purolite |
| Polystyrene cross-linked with divinyl benzene | Purosorb PAD 900 | Purolite |
| Polystyrene | Purosorb PAD 910 | Purolite |
| Polystyrene cross-linked with divinyl benzene | Purosorb PAD 1200 | Purolite |
| Polystyrene cross-linked with divinyl benzene | Macronet MN 200 | Purolite |
| Polystyrene cross-linked with divinyl benzene | Macronet MN 202 | Purolite |
| Polystyrene cross-linked with divinyl benzene | Macronet MN 250 | Purolite |
| Polystyrene cross-linked with divinyl benzene | Macronet MN 270 | Purolite |
| Aliphatic Methylacrylate | PuroSorb PAD 610 | Purolite |
| Aliphatic Methylacrylate | Purosorb PAD 950 | Purolite |
| Macroporous polystyrene cross-linked with divinyl benzene | Macronet MN150 | Purolite |
| Macroporous polystyrene cross-linked with divinyl benzene | Macronet MN152 | Purolite |
| Macroporous polystyrene cross-linked with divinyl benzene | Macronet MN 500 | Purolite |
| Macroporous polystyrene cross-linked with divinyl benzene | Macronet MN 502 | Purolite |
| Macroporous polystyrene cross-linked with divinyl benzene | Macronet MN | Purolite |
| Cross-linked polystyrene | Lewatit VOPC 1064 | Lanxess |
| Micoporous adsorbent on carbon base | AF-5 | Lanxess |
| Macroporous polystyrene cross-linked with divinyl benzene | Lewatit S7968 | Lanxess |
| Macroreticular cross-linked aromatic polymer | XAD-4 | Rohm & Haas |
| Cross-linked polystyrene | XAD-2 | Rohm & Haas |

| | | |
|---|---|---|
| **1)** pH stability of adosorbent material between 0-14. | | |

The term "macroporous" as used herein describes a material with pores having an average pore size of more than 2 nm, preferably a pore size of from 5 to 110 nm. The average pore size is the measured or calculated average over the size of all pores in the material. Methods for determining the pore size are well-known and include e.g. the Hg intrusion method.

The term "microporous" as used herein describes a material with pores having an average pore size of less than 2 nm, preferably 1 nm. The average pore size is the measured or calculated average over the size of all pores in the material. Methods for determining the pore size are well-known and include e.g. the Hg intrusion method.

It was surprisingly found that the concentration of aromatic substances in the oil phase was particularly high if the adsorbent is heated to a temperature in the range of from 110 °C to 170 °C during the thermal desorption, and especially for a temperature in the range of from 120 °C to 150 °C before the water steam is applied (see Example 2 below).

It is preferred that in step c) the adsorbent is heated to a temperature in the range of from 120 °C to 150 °C, further preferably in the range of from 140 °C to 150 °C before the water steam is applied.

It has surprisingly been found that heating the adsorbent to a temperature in the range of from 140 °C to 150 °C before the water steam is applied provided particularly high yields of aromatic substances (see Example 2 below).

Preferably, the adsorbent itself is heated by one or more heating element(s) before the water steam is applied. Preferably, the one or more heating element(s) can be positioned outside and/or inside the column comprising the adsorbent.

In addition to the temperature of the adsorbent itself, the temperature of the water steam applied in step c) can be important.

It is therefore preferred that the water steam applied in step c) has a temperature in the range of from 120 °C to 180 °C, preferably in the range of from 130 °C to 160 °C, further preferably in the range of from 150 °C to 160 °C.

Additionally or alternatively, the water steam applied in step c) preferably has a temperature which is 5 to 15 °C, preferably 7.5 to 12.5 °C, particularly preferably 10 °C higher than the temperature to which the adsorbent is heated to before the water steam is applied.

Additionally, it was surprisingly found that the concentration of aromatic substances in the oil phase was particularly high if the thermal desorption comprises a step of applying water steam to the adsorbent with a water steam flux of up to 20 g/min, based on a 2.0 L column (see Example 3 below).

Preferably, the water steam flux in step c) is in a range of from 5 g/min to 10 g/min, based on a 2.0 L column.

It has surprisingly been found that a water steam flux in a range of from 5 g/min to 10 g/min, based on a 2.0 L column, provided particularly high yields of aromatic substances (see Example 3 below).

The term "a 2.0 L column" is meant to be understood such that a column including the adsorbent is used / provided and that the inner volume of the column is 2.0 L. Typically, the inner volume of the column is substantially filled with the adsorbent.

The term "a water steam flux of 20 g/min, based on a 2.0 L column" (the following applies for other values of the steam flux accordingly) is understood such that a column with an inner volume of 2.0 L is used / provided. Typically, the inner volume of the column is substantially filled with the adsorbent. To said column, water steam is applied in a flux of 20 g/min. A skilled person knows that the effect of the same water steam flux is different depending on the volume of the used column. Thus, a "water steam flux of 20 g/min, based on a 2.0 L column" not only includes the particular 20 g/min in the particular 2.0 L column, but also a flux in a column of a different volume, which would correspond to the 20 g/min if the used column would have a volume of 2.0 L. Preferably, the flux changes proportionally to the volume of the column.

Preferably, the step of applying water steam to the adsorbent is downstream of the steps of loading the adsorbent with the liquid composition, rinsing the adsorbent at least once, preferably at least twice, with a mobile phase, e.g. water, and drying the adsorbent with nitrogen. Preferably, the drying step only reduces the amount of the mobile phase but does not completely remove it. Thus, the term "applying water steam to the adsorbent with a water steam flux of up to 50g/min, based on a 2.0 L column," may also include a water steam flux of 0 g/min, based on a 2.0 L column, if a thermal desorption with residual water can be performed after incomplete drying step (i.e. the mobile phase is not completely removed). In this way, the amount of applied water can be reduced to a minimum.

It is particularly advantageous to keep the water steam flux as low as possible, since a high water steam flux results in a high amount of water in the resulting aroma concentrate. The higher the amount of water, the more difficult is the separation of less polar and nonpolar aromatic substances and thus the separation of an oil phase in the aroma concentrate. Furthermore, a reduced water steam flux is more energy-efficient and thus less expensive and more environmentally friendly.

Preferably, the applied water steam comprises one or more solvents, preferably organic solvents. It was found that such solvents may have an impact on the aromatic profiles of the obtained aroma concentrates or, respectively, aroma oils and can thus be used to distinctly modify said aromatic profiles.

It was found for an apple aroma, for example, that it was particularly advantageous if the total amount of aromatic substances in the aroma concentrate was at least 5000 ppm, preferably at least 10,000 ppm. This amount may also apply to other aromas. However, it can also be different in other aromas.

Further preferably, the parameters temperature, water steam flux (based on a 2.0 L column) and pressure are selected according to the following table:

| Temperature adsorbent [°C] | Temperature applied water steam [°C] | Water steam flux [g/min] | Maximum pressure [bar] | Applied pressure [bar] |
|---|---|---|---|---|
| 120 | 130 | 5 | 0.9 | 0.7 |
| 130 | 140 | 5 | 1.7 | 1.4 |
| 140 | 150 | 5 | 2.3 | 1.9 |
| 150 | 160 | 5 | 3.4 | 3.0 |
| 160 | 170 | 5 | 5.1 | 4.6 |
| 170 | 180 | 5 | 6.6 | 6.1 |
| 120 | 130 | 10 | 1.3 | 1.0 |
| 130 | 140 | 10 | 2.0 | 1.7 |
| 140 | 150 | 10 | 2.7 | 2.4 |
| 150 | 160 | 10 | 3.8 | 3.4 |
| 160 | 170 | 10 | 5.5 | 5.0 |
| 170 | 180 | 10 | 6.9 | 6.4 |
| 120 | 130 | 20 | 1.5 | 1.2 |
| 130 | 140 | 20 | 2.6 | 2.3 |
| 140 | 150 | 20 | 3.2 | 2.9 |
| 150 | 160 | 20 | 4.8 | 4.4 |
| 160 | 170 | 20 | 6.0 | 5.5 |
| 170 | 180 | 20 | 7.5 | 7.0 |

The term "Temperature adsorbent" in the above table describes the temperature to which the adsorbent is heated before the water steam is applied.

The term "Temperature applied water steam" in the above table describes the temperature of the water steam that is to be applied on the adsorbent. The actual temperature of the water steam when directly in contact with the adsorbent may slightly differ from the indicated temperature.

The term "Applied pressure" in the above table describes the pressure present at the adsorbent. Typically, a closed system is used for the desorption with the water steam. In this case, the "Applied pressure" is the pressure, which shall be kept constant by the control valve present in this system during the desorption. Thus, the "Applied pressure" can be determined. The term "Maximum pressure" is the pressure, which sets in when applying the other parameters without opening the back pressure valve present in this system. The "Maximum pressure" is lower then the theoretical vapour pressure for the respective temperature. This can be explained by that the system is not perfectly closed for gas due to the control valve. Preferably, the "Applied pressure" is determined as 0.2 to 0.6 bar lower than the "Maximum pressure".

Preferably, in step e) a salt, preferably a salt selected from the group consisting of calcium carbonate, sodium carbonate, potassium carbonate, ammonium carbonate, sodium chloride, potassium chloride, calcium chloride, magnesium chloride, tin(ii)-chloride, sodium sulfate, potassium sulfate, ammonium sulfate, aluminium sulfate, aluminium sodium sulfate, aluminium potassium sulfate, aluminium ammonium sulfate, potassium acetate, sodium acetate, calcium acetate, sodium propionate, calcium propionate, potassium propionate, sodium lactate, potassium lactate, calcium lactate, sodium citrate, potassium citrate, triammonium citrate, sodium tartrate, potassium tartrate, sodium-potassium tartrate, sodium phosphate, potassium phosphate, diphosphate (Na), triphosphate (Na), polyphosphate, sodium malate, potassium malate, sodium adipate, potassium adipate, or a combination thereof, is added to the aroma concentrate before or after separating the first oil phase, wherein the amount of the salt is in a range of from 10 to 100 %, preferably in a range of from 50 to 90%, based on the theoretical solubility of the respective salt(s) in water. The theoretical solubility of the respective salt(s) in water is a parameter with values known in the literature.

As an example, the, one, two, three or more salt(s) can be selected from the following list:

| **Salt** | **E-Number** | **Formula** | **Solubility in water (%)** | **Molar Mass (g/mol)** |
|---|---|---|---|---|
| Calcium carbonate | E 170 | CaCO₃ | 14.0 | 100.1 |
| Sodium carbonate | E 500 | Na₂CO₃ | 21.7 | 106.0 |
| Potassium carbonate | E 501 | K2CO3 | 112 | 138.2 |
| Ammonium carbonate | E 503 | (NH₄)₂CO₃ | 32.0 | 96.1 |
| Sodium chloride | | NaCl | 36.0 | 58.4 |
| Potassium chloride | E 508 | KCI | 34.7 | 74.6 |
| Calcium chloride | E 509 | CaCl₂ | 74.0 | 111.0 |
| Magnesium chloride | E 511 | MgCl₂ | 54.2 | 95.2 |
| Tin(II)-chloride | E 512 | SnCl₂ | 270.0 | 189.6 |
| Sodium sulfate | E 514 | Na₂SO₄ | 17.0 | 142.0 |
| Potassium sulfate | E 514 | K₂SO₄ | 11.0 | 174.3 |
| Ammonium sulfate | E 517 | (NH₄)₂SO₄ | 75.4 | 132.1 |
| Aluminium sulfate | E 520 | Al₂(SO₄)₃ | 36.0 | 342.1 |
| Aluminium sodium sulfate | E 521 | NaAl(SO₄)₂ | soluble | 242.1 |
| Aluminium potassium sulfate | E 522 | KAl(SO₄)₂ | 13.9 | 474.4 |
| Aluminium ammonium sulfate | E 523 | NH₄Al(SO₄)₂ | 15.0 | 453.3 |
| Potassium acetate | E 261 | KCH₃COO | 256.0 | 98.2 |
| Sodium acetate | E 262 | NaCH₃COO | 36.5 | 82.0 |
| Calcium acetate | E 263 | Ca(CH₃COO)₂ | 40.0 | 158.2 |
| Sodium propionate | E 281 | Na C₃H₅O₂ | 99.5 | 96.1 |
| Calcium propionate | E 282 | Ca C₆H₁₀O₄ | 26.0 | 186.2 |
| Potassium propionate | E 283 | K C₃H₅O₂ | 178.0 | 112.2 |
| Sodium lactate | E 325 | NaC₃H₅O₃ | Can be mixed with water | 112.1 |
| Potassium lactate | E 326 | KC₃H₅O₃ | | 128.2 |
| Calcium lactate | E 327 | CaC₆H₁₀O₆ | 40.0 | 158.2 |
| Sodium citrate | E 331 | Na₃C₆H₅O₇ | 42.5 | 258.1 |
| Potassium citrate | E 332 | K₃ C₆H₅O₇ | 64.0 | 306.4 |
| Triammonium citrate | E 380 | (NH4)3 C₆H₅O₇ | 100 | 243.22 |
| Sodium tartrate | E 335 | Na₂C₄H₄O₆ | 33.0 | 194.1 |
| Potassium tartrate | E 336 | K₂C₄H₄O₆ | 23.5 | 226.3 |
| Sodium-Potassium tartrate | E 337 | KNaC₄H₄O₆ | 63.0 | 210.2 |
| Sodium phosphate | E 339 | Na₃PO₄ | 28.5 | 163.9 |
| Potassium phosphate | E 340 | K3PO4 | 50.8 | 212.3 |
| Diphosphate (Na) | E 450 (a) | Na₂H₂P₂O₇ | 12.0 | 221.9 |
| Triphosphate (Na) | E 451 | Na₅P₃O₁₀ | 14.5 | 367.9 |
| Sodium malate | E 350 | Na₂C₄H₄O₅ | Soluble | 178.1 |
| Potassium malate | E 351 | K₂C₄H₄O₅ | N/A | 210.3 |
| Sodium adipate | E 356 | Na₂C₆H₈O₄ | 58.5 | 190.1 |
| Potassium adipate | E 357 | Na₂C₆H₈O₄ | Soluble | 222.2 |

It was surprisingly found that the concentration of aromatic substances in the oil phase was particularly high if a salt was added to the aroma concentrate before separating the oil phase as described above (see Example 4 below).

After separating the oil phase with a high amount of aromatic substances from the water phase, it is particularly beneficial if further aromatic substances, which are still present in the water phase, are also extracted. The obtained oil phase mostly contains nonpolar and medium-polar aromatic substances whereas the polar aromatic substances are enriched in the water phase. It was surprisingly found that adding a salt, as described above, to the water phase drives out the aromatic substances from the water phase into a second oil phase containing these (mostly polar) aromatic substances. As a result, the total amount of yielded aromatic substances is particularly increased (see Example 5 below).

Therefore, it is further preferred that the method according to the invention further comprises the step
f) adding a salt, preferably a salt selected from the group consisting of calcium carbonate, sodium carbonate, potassium carbonate, ammonium carbonate, sodium chloride, potassium chloride, calcium chloride, magnesium chloride, tin(ii)-chloride, sodium sulfate, potassium sulfate, ammonium sulfate, aluminium sulfate, aluminium sodium sulfate, aluminium potassium sulfate, aluminium ammonium sulfate, potassium acetate, sodium acetate, calcium acetate, sodium propionate, calcium propionate, potassium propionate, sodium lactate, potassium lactate, calcium lactate, sodium citrate, potassium citrate, triammonium citrate, sodium tartrate, potassium tartrate, sodium potassium tartrate, sodium phosphate, potassium phosphate, diphosphate (Na), triphosphate (Na), polyphosphate, sodium malate, potassium malate, sodium adipate, potassium adipate, or a combination thereof,
to the water phase, after separating the oil phase in step e), preferably wherein the amount of the salt is in a range of from 10 to 100 %, preferably in a range of from 50 to 90%, based on the theoretical solubility of the respective salt(s) in water.

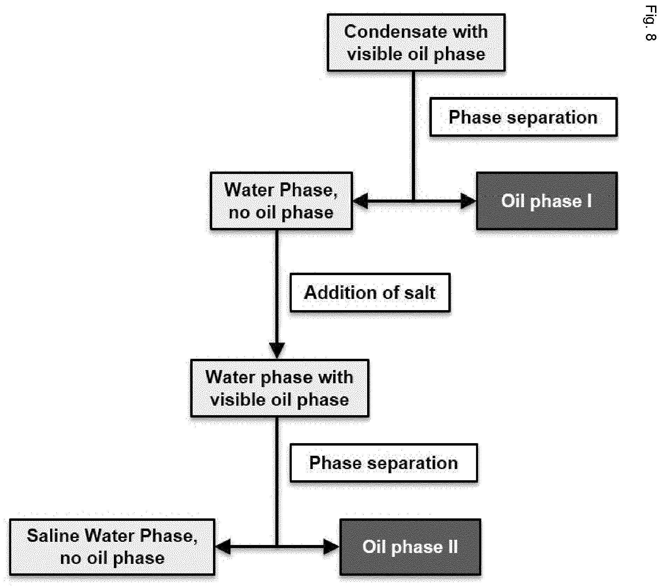

As described above, a salt may be added before the phases are separated or to the water phase, after separating the oil phase in step e). A flow chart for an exemplary setting can be seen in Figure 8. However, a salt may also be added before the phases are separated and to the water phase, after separating the oil phase in step e). In this case, the salt may be the same or different. The term "different" also includes the case that one of the salts is a combination of the salts specified herein and the other salt is either no combination or not the same combination of the salts specified herein.

The last stage of the method, in which the aroma concentrate is obtained, can also be performed in a way to obtain several fractions of the aroma concentrate (i.e. the fractions are aroma concentrates themselves).

It has surprisingly been found that depending on their chemical characteristics (e.g. water solubility), the respective aromatic substances are optimally desorbed from the adsorbent after a certain time and/or at a certain temperature and/or a certain water steam flux. It has thus been found that in such a fractionated approach, the different fractions (i.e. aroma concentrates) show a different profile of aromatic substances (see Example 6 below). Consequently, such a fractionated approach may be applied to separate the complex mixture of aromatic substances in the liquid composition and to obtain different fractions with distinct (classes of) aromatic substances enriched therein. Further surprisingly, the different fractions have a different sensory profile (see Example 6 below). Thus, it is furthermore particularly preferred that steps c) to d) or, each where applicable, to e) or to f) are performed at least 2 times, at least 3 times, at least 4 times, at least 5 times, at least 6 times, at least 7 times, at least 8 times, at least 9 times, at least 10 times or more than 10 times, for obtaining 2, 3, 4, 5, 6, 7, 8, 9, or, respectively, 10 or more aroma concentrates or, respectively, aroma oils.

The volume of the obtained fractions may be the same or may differ between one or more of the fractions. Preferably, the volume of the obtained fractions is in a range of from 0.5 to 30 % of the volume of the column used. Particularly preferably, the volume of the obtained fractions is 2 %, preferably 5 %, further preferably 10 %, also preferably 20 %, each of the volume of the column used. Thus, in case a column with a volume of 2 L is used, a volume of the obtained fractions of 5 % amounts to 100 mL. In case more than one column is used, the "volume of the column used" refers to the particular column(s) from which the respective fraction(s) is/are obtained. If the respective fraction(s) is/are obtained from more than one column, the "volume of the column used" refers to the sum of the volumes of these columns.

It is also preferred that the temperature, to which the adsorbent is heated to in step c) before the water steam is applied, varies between two, three, four or more or all of the performances of step c).

Also preferably, the temperature of the water steam applied in step c) varies between two, three, four or more or all of the performances of step c).

Preferably, the water steam flux in step c) varies between two, three, four or more or all of the performances of step c).

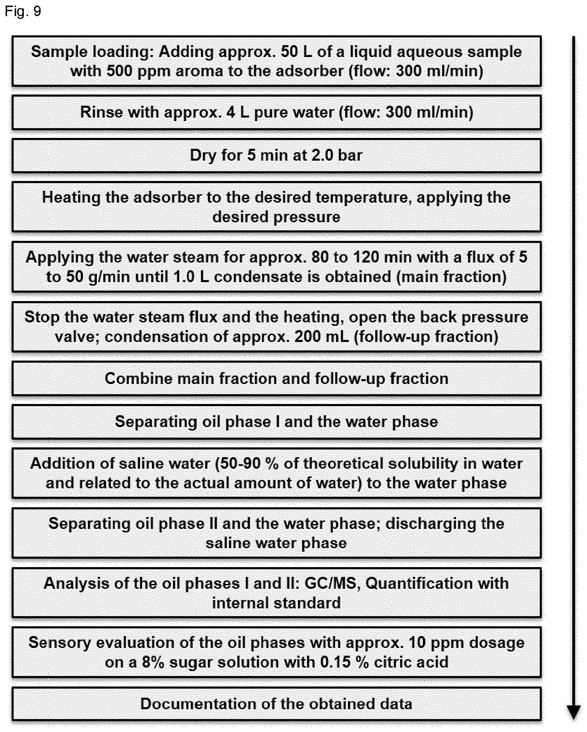

A flow chart of an exemplary procedure including further steps can be seen in Figure 9.

An exemplary procedure includes the following steps after step d) of the method according to the invention:
After approximately 1000 ml condensate is obtained, the heating of the adsorbent and the water steam are stopped. Subsequently, the back pressure valve is opened, resulting in a reduction of the pressure in the column. As soon as the pressure in the system is back at normal pressure, the thermal desorption is terminated. While the pressure drops, further 200 ml condensate are obtained and added to the already obtained condensate, such that a total of 1200 ml condensate are obtained.

After cooling the system, the adsorbent is eluted with ethanol (50 ml/min) to eluate the aromatic substances which are not volatile in water steam. In this case, the first 300 to 400 ml of obtained liquid are discharged as they represent the remaining moisture of the adsorbent without aromatic substances. The subsequently obtained ethanolic liquid contains the aromatic substances which are not volatile in water steam and has a volume of approximately 1600 ml.

### Description of the figures

Fig. 1 describes an experimental setup which can be used for the method according to the invention.

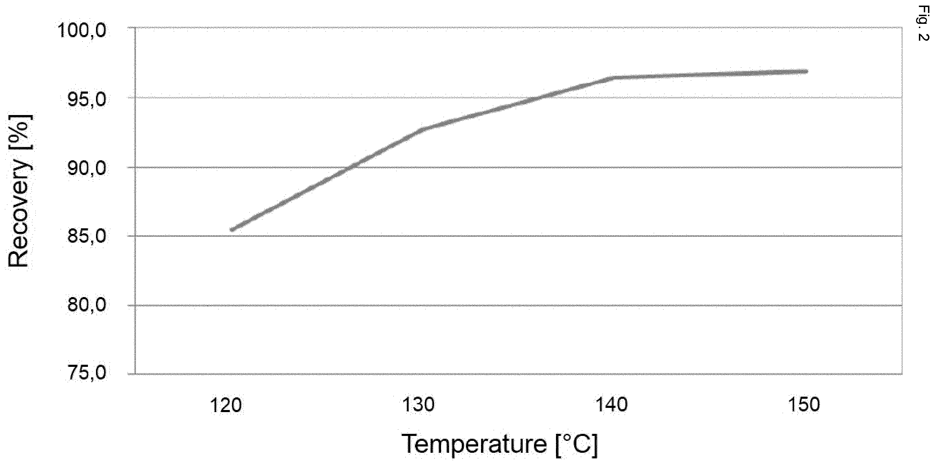

Fig. 2 shows the correlation between the temperature and the recovery of aromatic substances in a method according to the invention.

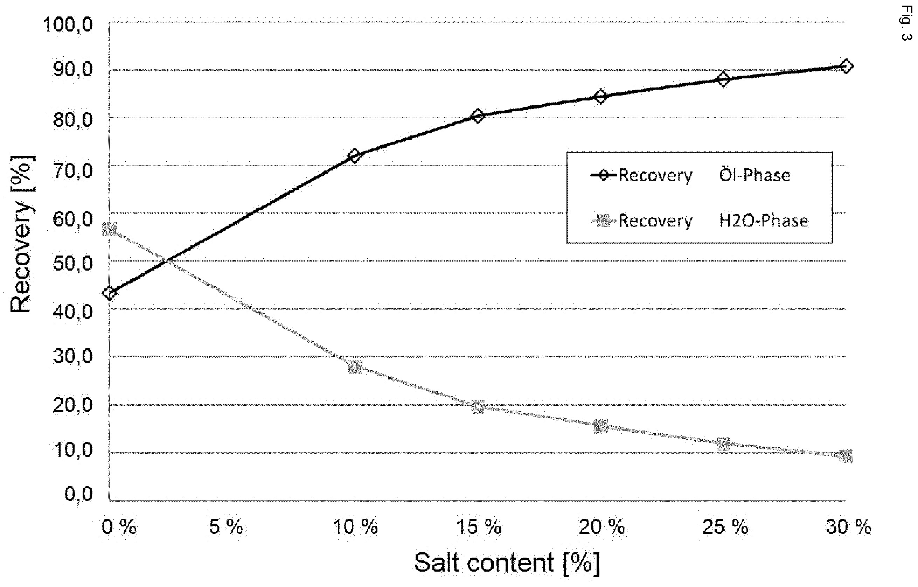

Fig. 3 shows the correlation between the salt content in a method according to the invention added before the phase separation and the recovery of aromatic substances in the oil phase (upper curve) and the water phase (lower curve).
Fig. 4 shows the recovery of aromatic substances in the different fractions in the fractionated approach of Example 6, wherein the proportions with regard to the sum of all fractions is indicated.
Fig. 5 shows the recovery of aromatic substances of the "Hexenal/Hexenol block" within the different fractions of Example 6, wherein the proportions with regard to the sum of all fractions is indicated.
Fig. 6 shows the recovery of aromatic substances of the "Ester block" within the different fractions of Example 6, wherein the proportions with regard to the sum of all fractions is indicated.
Fig. 7 shows the recovery of aromatic substances of the "Others block" within the different fractions of Example 6, wherein the proportions with regard to the sum of all fractions is indicated.
Fig. 8 shows a flow chart for an exemplary setting for adding salt and for obtaining oil phases I and II in a method according to the invention.
Fig. 9 shows a flow chart for an exemplary procedure of the method according to the invention for a column with a volume of 2.0 L filled with approx. 1200 g of adsorbent.

The present invention, preferred embodiments thereof and several aspects in connection therewith will be described below in the form of selected examples.

### Examples

### Example 1: Influence of the adsorbent material

| **Approach** | **Adsorbent** | **Aroma load** |
|---|---|---|
| **1** | Activated carbon (70 g) | 3.5 g (50 mg/g activated carbon) |
| **2** | 147 g Cross-linked polystyrene | 4.4 g (30 mg/g Cross-linked polystyrene) |

The two adsorbent were provided according to the above table and loaded with apple aroma as indicated. The volume flux for loading was 20 ml/min.

Thermal desorption was performed according to the invention.

In approach 1, an aqueous solution was obtained, no phase separation occurred.

In approach 2, a two-phase mixture, comprising an oil phase and a water phase, was obtained.

### Example 2: Influence of the temperature

An experimental setup as shown in Fig. 1 was provided.

The adsorbent had a volume of 2 L and was loaded with 50 kg apple aroma. Cross-linked polystyrene was used as adsorbent material. The volume flux for loading the adsorbent was 300 ml/min.

The adsorbent was heated to the following temperature before applying the water steam:

| **Approach** | **Temperature [°C]** |
|---|---|
| **1** | 120 |
| **2** | 130 |
| **3** | 140 |
| **4** | 150 |

The temperature of the applied water steam was 10 °C higher than the temperature indicated in the above table.

The water steam flux was 10 g/min and was applied for 100 min.

After approximately 1000 ml condensate is obtained, the heating of the adsorbent and the water steam are stopped. Subsequently, the back pressure valve is opened, resulting in a reduction of the pressure in the column. As soon as the pressure in the system is back at normal pressure, the thermal desorption is terminated. While the pressure drops, further 200 ml condensate are obtained and added to the already obtained condensate, such that a total of 1200 ml condensate are obtained.

After cooling the system, the adsorbent is eluted with ethanol (50 ml/min) to eluate the aromatic substances which are not volatile in water steam. In this case, the first 300 to 400 ml of obtained liquid are discharged as they represent the remaining moisture of the adsorbent without aromatic substances. The subsequently obtained ethanolic liquid contains the aromatic substances which are not volatile in water steam and has a volume of approximately 1600 ml. In the subsequent table, the percentage recovery of the aromatic substances in the oil phase (obtained due to thermal desorption with the water steam) compared to the phase eluted with ethanol is presented. The following values were measured:

| | **Recovery [%]** | | | | | | | |
|---|---|---|---|---|---|---|---|---|
| | **120 °C** | | **130 °C** | | **140 °C** | | **150 °C** | |
| **Substance** | **Oil phase** | **EtOH-phase** | **Oil phase** | **EtOH phase** | **Oil phase** | **EtOH phase** | **Oil phase** | **EtOH phase** |
| hexanol | 87.5 | 12.5 | 98.2 | 1.8 | 99.3 | 0.7 | 99.6 | 0.4 |
| 2/3-methyl butanol | 93 | 7 | 91.4 | 8.6 | 98.9 | 1.1 | 99.4 | 0.6 |
| *trans*-2-hexenol | 69.7 | 30.3 | 78.1 | 21.9 | 88.5 | 11.5 | 91.5 | 8.5 |
| *trans*-2-hexenal | 95.4 | 4.6 | 97.4 | 2.6 | 97.7 | 2.3 | 97.2 | 2.8 |
| butanol | 98 | 2 | 100 | 0 | 100 | 0 | 100 | 0 |
| butyl acetate | 99.8 | 0.2 | 99.6 | 0.4 | 99.9 | 0.1 | 99.8 | 0.2 |
| ethyl acetate | 100 | 0 | 100 | 0 | 100 | 0 | 100 | 0 |
| hexanal | 100 | 0 | 100 | 0 | 100 | 0 | 100 | 0 |
| *cis*-3-hexenol | 58.8 | 41.2 | 62.9 | 37.1 | 77 | 23 | 80.6 | 19.4 |
| 2/3-methyl butyl acetate | 98.6 | 1.4 | 99.1 | 0.9 | 100 | 0 | 100 | 0 |
| *trans*-3-hexenol | 80.9 | 19.1 | 81.3 | 18.7 | 90.3 | 9.7 | 95.6 | 4.4 |
| pentanol | 85.2 | 14.8 | 82.5 | 17.5 | 96 | 4 | 97.1 | 2.9 |
| ethyl butyrate | 100 | 0 | 99.7 | 0.3 | 100 | 0 | 99.7 | 0.3 |
| hexyl acetate | 73 | 27 | 100 | 0 | 100 | 0 | 100 | 0 |
| benzaldehyde | 69.6 | 30.4 | 100 | 0 | 100 | 0 | 100 | 0 |
| *trans*-2-hexenyl acetate | 68.5 | 31.5 | 100 | 0 | 100 | 0 | 100 | 0 |
| *cis*-2-hexenol | 70.7 | 29.3 | 81.3 | 18.7 | 88.6 | 11.4 | 89.6 | 10.4 |
| *cis*-3-hexenyl acetate | 73.8 | 26.2 | 100 | 0 | 100 | 0 | 100 | 0 |
| caproic acid | 22.8 | 77.2 | 24.6 | 75.4 | 37.8 | 62.2 | 40.1 | 59.9 |
| heptanol | 100 | 0 | 100 | 0 | 100 | 0 | 100 | 0 |
| ethyl 2-methyl butyrate | 98.9 | 1.1 | 99.4 | 0.6 | 99.8 | 0.2 | 99.7 | 0.3 |
| 2-methyl butyric acid | 11 | 89 | 11.1 | 88.9 | 16.8 | 83.2 | 18.3 | 81.7 |
| octanol | 37.7 | 62.3 | 100 | 0 | 100 | 0 | 100 | 0 |
| ethyl capronate | 100 | 0 | 100 | 0 | 100 | 0 | 100 | 0 |
| furfuryl alcohol | 100 | 0 | 46.9 | 53.1 | 54 | 46 | 54 | 46 |
| *trans*-2-hexenal dimethyl acetal | 78.6 | 21.4 | 84.3 | 15.7 | 85.7 | 14.3 | 86.2 | 13.8 |
| phenylethyl acetate | 9.5 | 90.5 | 55.7 | 44.3 | 54.4 | 45.6 | 72.8 | 27.2 |
| phenylethyl alcohol | 6.8 | 93.2 | 8.3 | 91.7 | 7.4 | 92.6 | 11.6 | 88.4 |
| caprylic acid | 0 | 100 | 21.9 | 78.1 | 37.1 | 62.9 | 53.9 | 46.1 |
| 3-ethoxy-hexanal | 0 | 100 | 0 | 100 | 0 | 100 | 80 | 20 |
| capric acid | 0 | 100 | 0 | 100 | 0 | 100 | 63 | 37 |
| **Total** | **85.4** | **14.6** | **92.7** | **7.3** | **96.4** | **3.6** | **96.9** | **3.1** |

| | | | | | | | | |
|---|---|---|---|---|---|---|---|---|
| See also Fig. 2. | | | | | | | | |

These results show that high amounts of aromatic substances could be eluted with a water steam in the temperature range of from 120 °C to 150 °C, wherein the range of from 140 °C to 150 °C is preferred.

### Example 3: Applying different water steam flux

An experimental setup as shown in Fig. 1 was provided.

The adsorbent had a volume of 2 L and was loaded with 50 kg apple aroma. Cross-linked polystyrene was used as adsorbent material. The volume flux for loading the adsorbent was 300 ml/min.

The adsorbent was heated to 150 °C, the temperature of the applied water steam was 160 °C.

The water steam flux was as indicated and was applied for 60-120 min.

| **Approach** | **Water steam flux [g/min]** |
|---|---|
| **1** | 0 |
| **2** | 5 |
| **3** | 10 |
| **4** | 20 |

After approximately 1000 ml condensate is obtained, the heating of the adsorbent and the water steam are stopped. Subsequently, the back pressure valve is opened, resulting in a reduction of the pressure in the column. As soon as the pressure in the system is back at normal pressure, the thermal desorption is terminated. While the pressure drops, further 200 ml condensate are obtained and added to the already obtained condensate, such that a total of 1200 ml condensate are obtained.

After cooling the system, the adsorbent is eluted with ethanol (50 ml/min) to eluate the aromatic substances which are not volatile in water steam. In this case, the first 300 to 400 ml of obtained liquid are discharged as they represent the remaining moisture of the adsorbent without aromatic substances. The subsequently obtained ethanolic liquid contains the aromatic substances which are not volatile in water steam and has a volume of approximately 1600 ml. In the subsequent table, the percentage recovery of the aromatic substances in the oil phase (obtained due to thermal desorption with the water steam) compared to the phase eluted with ethanol is presented. The following values were measured:

| | **Recovery [%]** | | | | | | | |
|---|---|---|---|---|---|---|---|---|
| | **0 g/min** | | **5 g/min** | | **10g/min** | | **20 g/min** | |
| **Substance** | **Oil phase** | **EtOH phase** | **Oil phase** | **EtOH phase** | **Oil phase** | **EtOH phase** | **Oil phase** | **EtOH phase** |
| hexanol | 97.4 | 2.6 | 99.4 | 0.6 | 99.6 | 0.4 | 99.3 | 0.7 |
| *trans*-2-hexenol | 75.6 | 24.4 | 90.3 | 9.7 | 91.5 | 8.5 | 85.2 | 14.8 |
| *trans*-2-hexenal | 96.8 | 3.2 | 97.2 | 2.8 | 97.2 | 2.8 | 96.7 | 3.3 |
| butanol | 76.8 | 23.2 | 100 | 0 | 100 | 0 | 96.8 | 3.2 |
| ethyl acetate | 89 | 11 | 100 | 0 | 100 | 0 | 99.6 | 0.4 |
| butyl acetate | 100 | 0 | 99.9 | 0.1 | 99.8 | 0.2 | 99.6 | 0.4 |
| hexanal | 100 | 0 | 100 | 0 | 100 | 0 | 99.7 | 0.3 |
| *cis*-3-hexenol | 59.8 | 40.2 | 79.2 | 20.8 | 80.6 | 19.4 | 69.1 | 30.9 |
| 2-methyl butyl acetate | 100 | 0 | 99.6 | 0.4 | 100 | 0 | 99.1 | 0.9 |
| *trans*-3-hexenol | 84.4 | 15.6 | 93.9 | 6.1 | 95.6 | 4.4 | 90.3 | 9.7 |
| pentanol | 68.6 | 31.4 | 94.5 | 5.5 | 97.1 | 2.9 | 85.5 | 14.5 |
| hexyl acetate | 100 | 0 | 100 | 0 | 100 | 0 | 100 | 0 |
| ethyl butyrate | 100 | 0 | 100 | 0 | 99.7 | 0.3 | 100 | 0 |
| benzaldehyde | 89.7 | 10.3 | 100 | 0 | 100 | 0 | 100 | 0 |
| *trans*-2-hexenyl acetate | 100 | 0 | 100 | 0 | 100 | 0 | 100 | 0 |
| ethyl 2-methyl butyrate | 100 | 0 | 99.3 | 0.7 | 99.7 | 0.3 | 99.7 | 0.3 |
| 3-ethoxy-hexanal | 90.5 | 9.5 | 90 | 10 | 0 | 100 | 85.1 | 14.9 |
| *cis*-3-hexenyl acetate | 100 | 0 | 100 | 0 | 100 | 0 | 100 | 0 |
| octanol | 100 | 0 | 100 | 0 | 100 | 0 | 100 | 0 |
| decanoic acid | 54.5 | 45.5 | 55.1 | 44.9 | 40.1 | 59.9 | 34.5 | 65.5 |
| heptanol | 100 | 0 | 100 | 0 | 100 | 0 | 100 | 0 |
| *cis*-2-hexenol | 70.3 | 29.7 | 87.5 | 12.5 | 89.6 | 10.4 | 81.1 | 18.9 |
| 2-methyl butyric acid | 21.7 | 78.3 | 25.6 | 74.4 | 18.3 | 81.7 | 18.4 | 81.6 |
| 1,3-pentenol | 76.5 | 23.5 | 100 | 0 | 100 | 0 | 100 | 0 |
| pentyl acetate | 100 | 0 | 100 | 0 | 100 | 0 | 100 | 0 |
| ethyl crotonate | 100 | 0 | 100 | 0 | 100 | 0 | 100 | 0 |
| butyl butyrate | 100 | 0 | 100 | 0 | 100 | 0 | 100 | 0 |
| *cis*-5-octenol | 0 | 0 | 0 | 0 | 100 | 0 | 100 | 0 |
| octanoic acid | 73.8 | 26.2 | 77.9 | 22.1 | 53.9 | 46.1 | 29 | 71 |
| propyl acetate | 100 | 0 | 100 | 0 | 100 | 0 | 100 | 0 |
| **Total** | 88.8 | 11.2 | 97.2 | 2.8 | 97.4 | 2.6 | 94.7 | 5.3 |

These results show that high amounts of aromatic substances are obtained with a water steam flux of up to 20 g/min, wherein the range of from 5 g/min to 10 g/min is preferred.

### Example 4: Obtaining a second oil phase

An experimental setup as shown in Fig. 1 was provided.

The adsorbent had a volume of 2 L and was loaded with 50 kg apple water phase. Cross linked polystyrene was used as adsorbent material. The volume flux for loading the adsorbent was 300 ml/min.

The adsorbent was heated to 150 °C, the temperature of the applied water steam was 160 °C.

The water steam flux was 10 g/min and was applied for 100 min.

Approximately 1200 ml condensate was obtained as described in Examples 2 or 3.

The oil and water phases were separated.

After separating the oil phase, the water phase was treated with 83.3 % NaCl, based on the theoretical solubility of NaCl in water.

A second oil phase was separated and was collected.

Analysing its content revealed that the polar aromatic substances (compounds listed further below in the following table) of the water phase could be concentrated in the second oil phase:

| | Recovery oil phase I | Recovery oil phase II | Loss in the water phase |
|---|---|---|---|
| | 0% Salt | 83.3% Salt | [%] |
| **Substance** | [%] | [%] | |
| hexanal | 100,0 | 0,0 | 0,0 |
| trans-2-hexenyl acetate | 100,0 | 0,0 | 0,0 |
| cis-3-hexenyl acetate | 100,0 | 0,0 | 0,0 |
| hexyl acetate | 93,4 | 6,6 | 0,0 |
| octanol | 91,3 | 8,7 | 0,0 |
| 2-methylbutyl acetate | 79,3 | 20,6 | 0,2 |
| heptanol | 76,2 | 23,8 | 0,0 |
| 2-phenylethyl acetate | 70,8 | 29,2 | 0,0 |
| 2-methylpropyl acetate | 69,3 | 29,7 | 1,0 |
| ethyl 2-methylbutyrate | 66,1 | 33,9 | 0,0 |
| hexanol | 59,2 | 39,0 | 1,8 |
| butyl acetate BUTYL ACETATE | 53,5 | 45,1 | 1,4 |
| trans-3-hexenol | 51,8 | 45,5 | 2,7 |
| ethyl butyrate | 49,4 | 49,4 | 1,3 |
| 3-ethoxy-hexanal | 48,4 | 50,1 | 1,5 |
| hexanoic acid | 43,5 | 54,4 | 2,1 |
| trans-2-hexenol | 37,9 | 56,1 | 6,0 |
| trans-2-hexenal | 35,5 | 52,0 | 12,5 |
| 2-methyl butanol | 30,8 | 51,9 | 17,3 |
| cis-3-hexenol | 30,6 | 58,6 | 10,8 |
| pentanol | 29,5 | 55,1 | 15,4 |
| 3-methyl butanol | 28,4 | 53,7 | 17,9 |
| benzaldehyde | 27,0 | 53,8 | 19,2 |
| butanol | 24,9 | 29,1 | 46,0 |
| 2-methylbutyric acid | 23,4 | 55,0 | 21,5 |
| 2-methyl propanol | 17,1 | 33,1 | 49,8 |
| ethyl acetate | 10,4 | 34,9 | 54,8 |
| | **43,3** | **47,4** | **9,3** |

### Example 5: Influence of the amount of salt

Example 4 was performed as described, however, NaCl was added to the water phase after phase separation as indicated in the following table:

| **Approach** | **NaCl [%, based on the theoretical solubility of NaCl in water]** |
|---|---|
| **1** | 0 |
| **2** | 27.8 |
| **3** | 41.67 |
| **4** | 55.56 |
| **5** | 69.44 |
| **6** | 83.33 |

The following values were measured:

| | **Distribution in [%] between oil phase and water phase after condensation** | | | | | | | | | | | |
|---|---|---|---|---|---|---|---|---|---|---|---|---|
| **NaCl** | **0%** | | **27.8 %** | | **41.67%** | | **55.56 %** | | **69.44 %** | | **83.33 %** | |
| Substance | **Oil phase** | **Water phase** | **Oil phase** | **Water phase** | **Oil phase** | **Water phase** | **Oil phase** | **Water phase** | **Oil phase** | **Water phase** | **Oil phase** | **Water phase** |
| hexanol | 59.2 | 40.8 | 89.6 | 10.4 | 93.8 | 6.2 | 96.2 | 3.8 | 97.5 | 2.5 | 98.2 | 1.8 |
| *trans*-2-hexenol | 37.9 | 62.1 | 73.6 | 26.4 | 82.6 | 17.4 | 88.4 | 11.6 | 91.7 | 8.3 | 94 | 6 |
| 2-methyl butanol | 30.8 | 69.2 | 69 | 31 | 64.4 | 35.6 | 70.6 | 29.4 | 82.5 | 17.5 | 82.7 | 17.3 |
| *trans*-2-hexenal | 35.5 | 64.5 | 63.6 | 36.4 | 71.5 | 28.5 | 76.8 | 23.2 | 83.3 | 16.7 | 87.5 | 12.5 |
| 3-methyl butanol | 28.4 | 71.6 | 39 | 61 | 63.1 | 36.9 | 69.7 | 30.3 | 68.9 | 31.1 | 82.1 | 17.9 |
| butanol | 24.9 | 75.1 | 35.2 | 64.8 | 45.8 | 54.2 | 47.5 | 52.5 | 50 | 50 | 54 | 46 |
| ethyl acetate | 10.4 | 89.6 | 20.8 | 79.2 | 30.3 | 69.7 | 33.2 | 66.8 | 38.9 | 61.1 | 45.2 | 54.8 |
| *cis*-3-hexenol | 30.6 | 69.4 | 62.8 | 37.2 | 73.3 | 26.7 | 80.5 | 19.5 | 85.6 | 14.4 | 89.2 | 10.8 |
| butyl acetate | 53.5 | 46.5 | 85.6 | 14.4 | 92.5 | 7.5 | 95 | 5 | 97.5 | 2.5 | 98.6 | 1.4 |
| *trans*-3-hexenol | 51.8 | 48.2 | 84 | 16 | 90.5 | 9.5 | 93.6 | 6.4 | 96.2 | 3.8 | 97.3 | 2.7 |
| hexanal | 100 | 0 | 100 | 0 | 100 | 0 | 100 | 0 | 100 | 0 | 100 | 0 |
| 2-methylbutyl acetate | 79.3 | 20.7 | 97.1 | 2.9 | 98.6 | 1.4 | 99.2 | 0.8 | 99.7 | 0.3 | 99.8 | 0.2 |
| pentanol | 29.5 | 70.5 | 56.8 | 43.2 | 67.2 | 32.8 | 73.8 | 26.2 | 79.8 | 20.2 | 84.6 | 15.4 |
| ethyl butyrate | 49.4 | 50.6 | 85.1 | 14.9 | 92.9 | 7.1 | 95.4 | 4.6 | 97.7 | 2.3 | 98.7 | 1.3 |
| hexyl acetate | 93.4 | 6.6 | 99.4 | 0.6 | 100 | 0 | 100 | 0 | 100 | 0 | 100 | 0 |
| benzaldehyde | 27 | 73 | 57.5 | 42.5 | 64.7 | 35.3 | 70.4 | 29.6 | 76.7 | 23.3 | 80.8 | 19.2 |
| 2-methyl propanol | 17.1 | 82.9 | 29.7 | 70.3 | 41 | 59 | 42.8 | 57.2 | 45.9 | 54.1 | 50.2 | 49.8 |
| hexanoic acid | 43.5 | 56.5 | 84.9 | 15.1 | 91.5 | 8.5 | 94.9 | 5.1 | 97 | 3 | 97.9 | 2.1 |
| ethyl 2-methylbutyrate | 66.1 | 33.9 | 95 | 5 | 97.9 | 2.1 | 98.8 | 1.2 | 99.7 | 0.3 | 100 | 0 |
| *trans*-2-hexenyl acetate | 100 | 0 | 97.2 | 2.8 | 100 | 0 | 100 | 0 | 100 | 0 | 100 | 0 |
| 3-ethoxy-hexanal | 48.4 | 51.6 | 78.9 | 21.1 | 89 | 11 | 94.6 | 5.4 | 97.4 | 2.6 | 98.5 | 1.5 |
| octanol | 91.3 | 8.7 | 100 | 0 | 100 | 0 | 100 | 0 | 100 | 0 | 100 | 0 |
| 2-methylpropyl acetate | 69.3 | 30.7 | 92.1 | 7.9 | 96.2 | 3.8 | 97.5 | 2.5 | 98.6 | 1.4 | 99 | 1 |
| 2-methylbutyric acid | 23.4 | 76.6 | 48.2 | 51.8 | 58.4 | 41.6 | 67 | 33 | 73.5 | 26.5 | 78.5 | 21.5 |
| *cis*-3-hexenyl acetate | 100 | 0 | 100 | 0 | 100 | 0 | 100 | 0 | 100 | 0 | 100 | 0 |
| heptanol | 76.2 | 23.8 | 100 | 0 | 100 | 0 | 100 | 0 | 100 | 0 | 100 | 0 |
| 2-phenylethyl acetate | 70.8 | 29.2 | 96.9 | 3.1 | 98 | 2 | 100 | 0 | 100 | 0 | 100 | 0 |
| ethyl propionate | 0 | 100 | 0 | 100 | 0 | 100 | 0 | 100 | 0 | 100 | 0 | 100 |
| **Total** | **43.3** | **56.7** | **72** | **28** | **80.4** | **19.6** | **84.4** | **15.6** | **88** | **12** | **90.7** | **9.3** |

| | | | | | | | | | | | | |
|---|---|---|---|---|---|---|---|---|---|---|---|---|
| See also Fig. 3. | | | | | | | | | | | | |

These results show that the addition of salt leads to an increase of the yield of aromatic substances in the oil phase.

### Example 6: Fractionation approach

An experimental setup as shown in Fig. 1 was provided.

The adsorbent had a volume of 2 L and was loaded with 50 kg apple aroma. Cross-linked polystyrene was used as adsorbent material. The volume flux for loading the adsorbent was 300 ml/min.

The adsorbent was heated to 150 °C, the temperature of the applied water steam was 160 °C

The water steam flux was 10 g/min and was applied ten times for 10 min each.

Ten fractions of 100 ml each, which corresponds to 5 % of the column volume, were obtained. A clear separation of oil phases was observed. The oil phases were each separated and analysed for their contents.

The proportion of the aromatic substances, related to the total amount of aromatic substances obtained in the sum of all oil phases, is indicated in the following table.

| **Fraction** | 1 | 2 | 3 | 4 | 5 | 6 | 7 | 8 | 9 | 10 | ethanolic eluate | Total |
|---|---|---|---|---|---|---|---|---|---|---|---|---|
| Weight of oil phases [g] | 7.9 | 8.5 | 7.0 | 6.0 | 4.0 | 3.1 | 2.4 | 2.0 | 1.4 | 1.0 | 1.3 | 44.7 |
| Proportion of aromatic substances [%] | 17.8 | 19.0 | 15.7 | 13.5 | 8.9 | 7.0 | 5.5 | 4.4 | 3.0 | 2.2 | 3.0 | 100.0 |

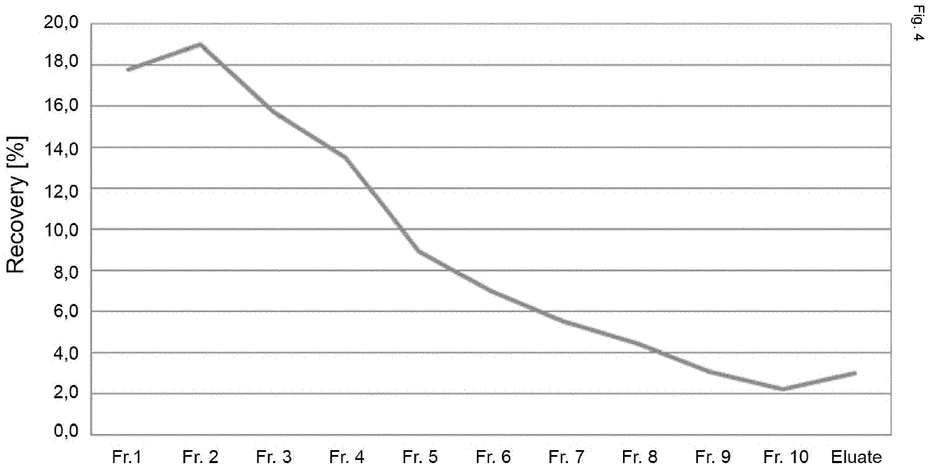

See also Fig. 4.

Further, the amounts of aromatic substances classified as "Hexenal/Hexenol block", "Ester block" and "others" was determined. The proportion between the different fractions is shown in the following tables (fraction 8 was excluded due to technical reasons):

Hexenal/Hexenol block:

| | **Proportion [%]** | | | |
|---|---|---|---|---|
| **Fraction** | ***trans*-2-hexenol,** | ***trans*-2-hexenal** | ***cis*-3-hexenol** | ***trans*-3-hexenol** |
| 1 | 2.8 | 12.7 | 2.2 | 4.1 |
| 2 | 4.6 | 20.0 | 3.6 | 7.8 |
| 3 | 6.0 | 18.9 | 4.7 | 12.1 |
| 4 | 7.2 | 16.4 | 5.5 | 11.5 |
| 5 | 8.5 | 11.9 | 6.9 | 8.5 |
| 6 | 11.3 | 7.9 | 10.4 | 10.6 |
| 7 | 14.6 | 5.4 | 14.2 | 10.2 |
| 9 | 21.0 | 3.7 | 23.8 | 15.2 |
| 10 | 24.1 | 3.1 | 28.8 | 20.1 |

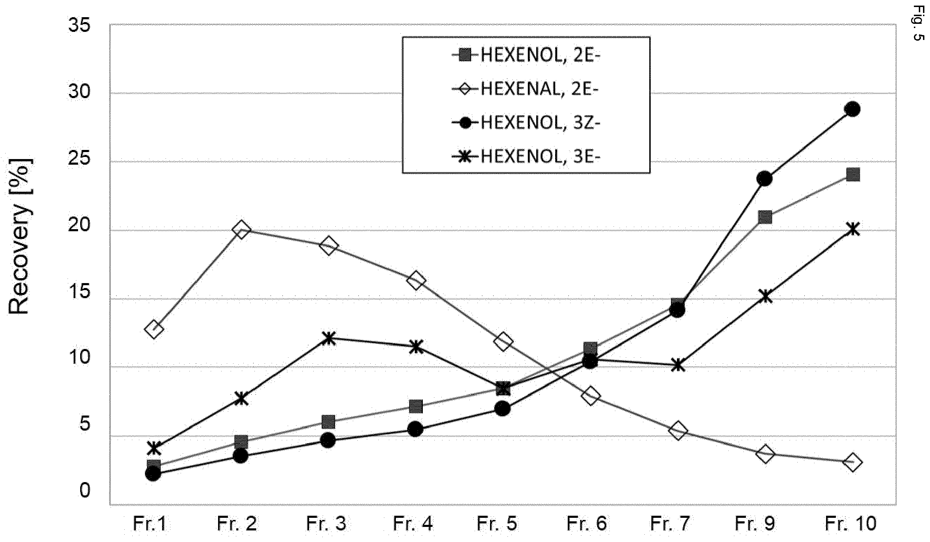

See also Fig. 5.

Ester block:

| | **Proportion [%]** | | | | | | |
|---|---|---|---|---|---|---|---|
| **Fraction** | **ethyl acetate** | **propyl acetate** | **butyl acetate** | **2-methyl butyl acetate** | **ethyl butyrate** | **ethyl propionate** | **methyl butyrate** |
| 1 | 50.0 | 43.7 | 50.4 | 42.3 | 45.1 | 49.3 | 47.8 |
| 2 | 18.5 | 38.9 | 30.4 | 29.9 | 28.2 | 50.5 | 52.2 |
| 3 | 15.9 | 17.4 | 11.2 | 14.9 | 14.5 | 0.1 | 0.0 |
| 4 | 11.9 | 0.0 | 4.6 | 7.5 | 8.2 | 0.0 | 0.0 |
| 5 | 2.9 | 0.0 | 1.2 | 3.3 | 4.1 | 0.0 | 0.0 |
| 6 | 0.4 | 0.0 | 1.0 | 1.0 | 0.0 | 0.0 | 0.0 |
| 7 | 0.2 | 0.0 | 0.0 | 0.7 | 0.0 | 0.0 | 0.0 |
| 9 | 0.1 | 0.0 | 0.6 | 0.0 | 0.0 | 0.0 | 0.0 |
| 10 | 0.0 | 0.0 | 0.7 | 0.6 | 0.0 | 0.0 | 0.0 |

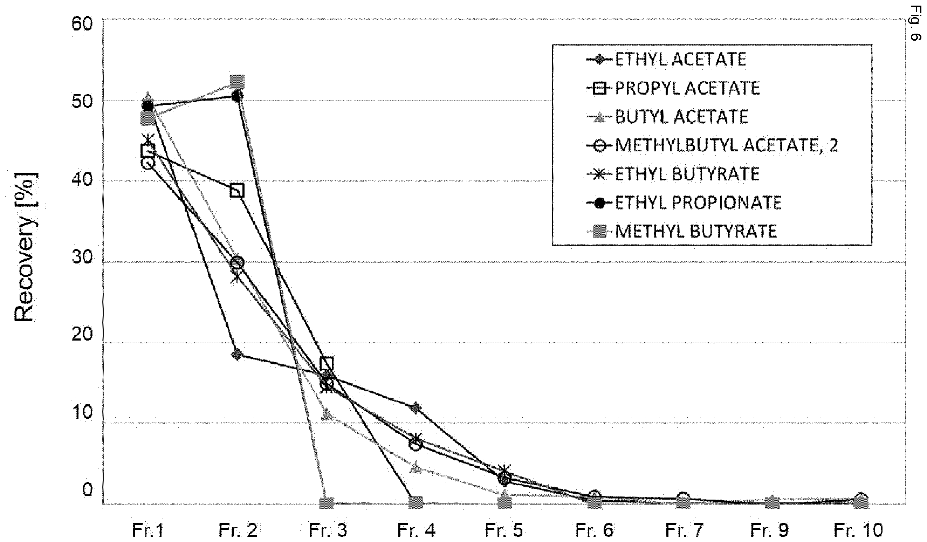

See also Fig. 6.

Others:

| | **Proportion [%]** | | | | | | |
|---|---|---|---|---|---|---|---|
| **Fraction** | **hexanol** | **2/3-methyl butanol** | **butyl alcohol** | **pentanol** | **hexanoic acid** | **2-methyl propanol / hexanal** | **3-pentanone** |
| 1 | 6.9 | 3.7 | 8.1 | 3.5 | 4.9 | 25.9 | 0.0 |
| 2 | 11.1 | 6.6 | 14.7 | 6.0 | 3.7 | 24.2 | 3.3 |
| 3 | 13.0 | 7.5 | 13.6 | 7.9 | 4.4 | 15.0 | 30.6 |
| 4 | 13.6 | 8.5 | 16.2 | 9.4 | 6.0 | 14.2 | 36.7 |
| 5 | 13.0 | 12.4 | 20.0 | 12.6 | 6.7 | 13.1 | 29.4 |
| 6 | 11.7 | 16.4 | 18.0 | 18.1 | 9.8 | 6.2 | 0.0 |
| 7 | 10.4 | 17.2 | 8.4 | 21.3 | 10.6 | 1.0 | 0.0 |
| 9 | 9.8 | 16.4 | 0.8 | 0.0 | 20.8 | 0.0 | 0.0 |
| 10 | 10.6 | 11.3 | 0.2 | 21.2 | 33.1 | 0.5 | 0.0 |

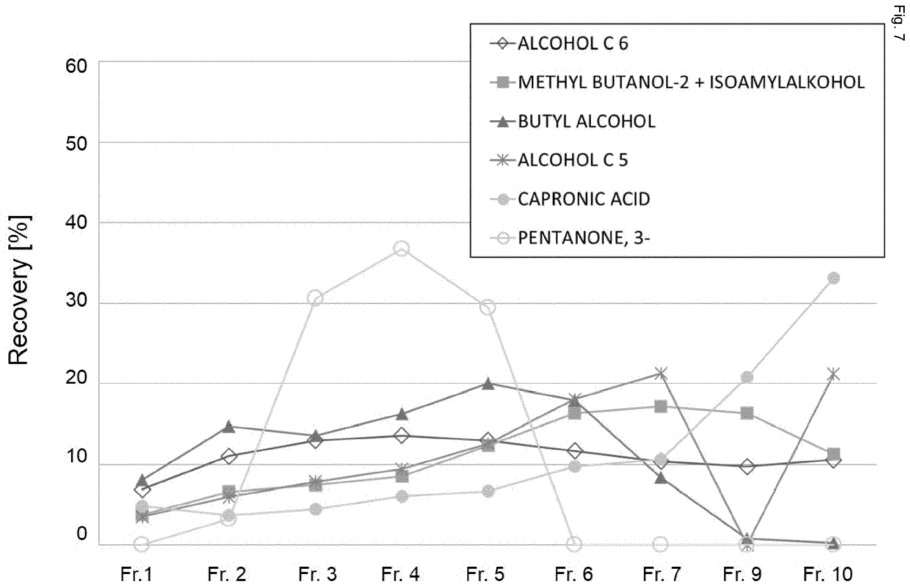

See also Fig. 7.

It was found that the compounds of the "Ester block" are predominantly found in the first fractions, Hexenal is mostly found in fractions 2-4 and then decreases in its amount, Hexenol is increased in the last fractions and other substances have specific appearances in different fractions, depending on their polarity and volatility.

The different fractions were then assessed for their sensory profile:
Samples containing 10 ppm of the obtained fractions, 8 wt.-% sugar and 0.15 wt.-% citric acid were evaluated by a test panel, the sensory impression was described:

| **Fraction** | **Sensory impression** |
|---|---|
| 1 | Ester, fruity, , ripe, apple, very juicy, green |
| 2 | Ester, fruity, slightly more green, more body / fullness |
| 3 | Ester, fruity, slightly like green apple |
| 4 | More flat, like skin, fruity, apple shell, red apple |
| 5 | Flat, like skin, slightly fruity |
| 6 | Green, like skin, fruity, apple skin, slightly fermented |
| 7 | Flat, apple skin, slightly like plum |
| 8 | Weak, slightly green, apple puree, slightly woody |
| 9 | Green, apple skin, apple juice, fruity, juicy |
| 10 | Green, apple skin, slightly fermented, fruity, juicy |
| eluate | Green, like fusel, heavy fruity, apple puree, similar to fraction 10 but weaker |

It was found that fractions 1-4 had a sensory profile dominated by green and fresh impressions, fractions 5-6 were dominated by apple skin impressions and fermented, fusel-like notes dominated fractions 7-10 and the eluate.

Mixtures of fractions 1-4, 5-6 and 7-10 were prepared and evaluated for their sensory profile according to the above experiment:

| **Fraction** | **Sensory impression** |
|---|---|
| 1-4 | Lively, ester, fruity, apple juice, slightly green, juicy |
| 5-6 | Skin impressions / apple skin, flaky, cooked note, green, slightly ester, slightly fruity, mouthfeel, impact |
| 7-10 | Apple puree, cooked apple, slightly fusel-likenote |

As a result, the different fractions show different sensory impressions. Thus, by means of a fractionated approach, the sensory profile of the obtained aroma concentrate(s) can be controlled.

## Claims

1. Method for producing an aroma concentrate of a liquid composition, comprising one or more aromatic substance(s), comprising or consisting of the following steps:
a) providing a liquid or gaseous composition, comprising one or more aromatic substance(s),
b) adding the liquid or gaseous composition provided in step a) to an adsorbent for adsorbing the, one, more or all of the one or more aromatic substance(s) of the liquid composition,
wherein the adsorbent comprises or consists of adsorber resin, such as polystyrene cross-linked with divinyl benzene, macroporous polystyrene cross-linked with divinyl benzene, polystyrene, cross-linked polystyrene, aliphatic methylacrylate, microporous adsorber based on carbon, or a combination thereof,
c) recovering the, one, more or all of the adsorbed one or more aromatic substance(s) from the adsorbent by thermal desorption,
wherein the thermal desorption comprises a step of applying water steam to the adsorbent, preferably with a water steam flux of up to 50 g/min based on a 2.0 L column, further preferably with a water steam flux of up to 20 g/min based on a 2.0 L column,
wherein the adsorbent is heated to a temperature in the range of from 110 °C to 170 °C before the water steam is applied,
d) condensing the water steam applied in step c) to obtain an aroma concentrate comprising the, one, more or all of the one or more aromatic substance(s),
wherein the aroma concentrate comprises a water phase and an oil phase, comprising the, one, more or all of the one or more aromatic substance(s).

2. Method according to claim 1, wherein the method further comprises the step
e) separating the oil phase to obtain an aroma oil comprising the, one, more or all of the one or more aromatic substance(s).

3. Method according to claim 2, wherein in step e) a salt, preferably a salt selected from the group consisting of calcium carbonate, sodium carbonate, potassium carbonate, ammonium carbonate, sodium chloride, potassium chloride, calcium chloride, magnesium chloride, tin(ii)-chloride, sodium sulfate, potassium sulfate, ammonium sulfate, aluminium sulfate, aluminium sodium sulfate, aluminium potassium sulfate, aluminium ammonium sulfate, potassium acetate, sodium acetate, calcium acetate, sodium propionate, calcium propionate, potassium propionate, sodium lactate, potassium lactate, calcium lactate, sodium citrate, potassium citrate, triammonium citrate, sodium tartrate, potassium tartrate, sodium-potassium tartrate, sodium phosphate, potassium phosphate, diphosphate (Na), triphosphate (Na), polyphosphate, sodium malate, potassium malate, sodium adipate, potassium adipate, or a combination thereof, is added to the aroma concentrate before separating the oil phase, wherein the amount of the salt is in a range of from 10 to 100 %, preferably in a range of from 50 to 90%, based on the theoretical solubility of the respective salt(s) in water.

4. Method according to claim 2, wherein the method further comprises the step
f) adding a salt, preferably a salt selected from the group consisting of calcium carbonate, sodium carbonate, potassium carbonate, ammonium carbonate, sodium chloride, potassium chloride, calcium chloride, magnesium chloride, tin(ii)-chloride, sodium sulfate, potassium sulfate, ammonium sulfate, aluminium sulfate, aluminium sodium sulfate, aluminium potassium sulfate, aluminium ammonium sulfate, potassium acetate, sodium acetate, calcium acetate, sodium propionate, calcium propionate, potassium propionate, sodium lactate, potassium lactate, calcium lactate, sodium citrate, potassium citrate, triammonium citrate, sodium tartrate, potassium tartrate, sodium-potassium tartrate, sodium phosphate, potassium phosphate, diphosphate (Na), triphosphate (Na), polyphosphate, sodium malate, potassium malate, sodium adipate, potassium adipate, or a combination thereof,
to the water phase, after separating the oil phase in step e), preferably wherein the amount of the salt is in a range of from 10 to 100 %, preferably in a range of from 50 to 90%, based on the theoretical solubility of the respective salt(s) in water.

5. Method according to any one of the previous claims, wherein the water steam flux in step c) is up to 20 g/min, based on a 2.0 L column, preferably in a range of from 5 g/min to 10 g/min, based on a 2.0 L column.

6. Method according to any one of the previous claims, wherein in step c) the adsorbent is heated to a temperature in the range of from 120 °C to 150 °C, further preferably in the range of from 140 °C to 150 °C before the water steam is applied.

7. Method according to any one of the previous claims, wherein the water steam applied in step c) has a temperature in the range of from 120 °C to 180 °C, preferably in the range of from 130 °C to 160 °C, further preferably in the range of from 150 °C to 160 °C.

8. Method according to any one of the previous claims, wherein the water steam applied in step c) has a temperature which is 5 to 15 °C, preferably 7.5 to 12.5 °C, particularly preferably 10 °C higher than the temperature to which the adsorbent is heated to before the water steam is applied.

9. Method according to any one of the previous claims, wherein steps c) to d) or, each where applicable, to e) or to f) are performed at least 2 times, at least 3 times, at least 4 times, at least 5 times, at least 6 times, at least 7 times, at least 8 times, at least 9 times, at least 10 times or more than 10 times, for obtaining 2, 3, 4, 5, 6, 7, 8, 9, or, respectively, 10 or more aroma concentrates or, respectively, aroma oils.

10. Method according to claim 9, wherein the temperature, to which the adsorbent is heated to in step c) before the water steam is applied, varies between two, three, four or more or all of the performances of step c).

11. Method according to claims 9 or 10, wherein the temperature of the water steam applied in step c) varies between two, three, four or more or all of the performances of step c).

12. Method according to any one of claims 9 to 11, wherein the water steam flux in step c) varies between two, three, four or more or all of the performances of step c).

13. Method according to any one of the preceding claims, wherein the liquid or gaseous composition provided in step a) is of plant, animal or fungal origin or a combination of compositions of plant and/or animal and/or fungal origin.

## Patentansprüche

1. Verfahren zur Herstellung eines Aromakonzentrats aus einer flüssigen Zusammensetzung, die einen oder mehrere Aromastoff(e) enthält, umfassend oder bestehend aus den folgenden Schritten:
a) Bereitstellen einer flüssigen oder gasförmigen Zusammensetzung, die einen oder mehrere Aromastoff(e) enthält,
b) Zugeben der in Schritt a) bereitgestellten flüssigen oder gasförmigen Zusammensetzung zu einem Adsorber zum Adsorbieren des, eines, mehrerer oder aller der ein oder mehreren Aromastoffe der flüssigen Zusammensetzung, wobei der Adsorber ein Adsorberharz umfasst oder daraus besteht, wie Polystyrol vernetzt mit Divinylbenzol, makroporöses Polystyrol vernetzt mit Divinylbenzol, Polystyrol, vernetztes Polystyrol, aliphatisches Methylacrylat, mikroporöse Adsorber auf Kohlenstoffbasis, oder einer Kombination davon,
c) Rückgewinnen des, eines, mehrerer oder aller der adsorbierten ein oder mehreren Aromastoff(e) aus dem Adsorber durch thermische Desorption,
wobei die thermische Desorption einen Schritt des Aufbringens von Wasserdampf auf den Adsorber, vorzugsweise mit einem Wasserdampffluss von bis zu 50 g/min, bezogen auf eine 2,0-Liter-Säule, weiter bevorzugt mit einem Wasserdampffluss von bis zu 20 g/min bezogen auf eine 2,0-Liter-Säule, umfasst,
wobei der Adsorber auf eine Temperatur im Bereich von 110 °C bis 170 °C erwärmt wird, bevor der Wasserdampf aufgebracht wird,
d) Kondensieren des in Schritt c) aufgebrachten Wasserdampfes zur Gewinnung eines Aromakonzentrats, das den, einen, mehrere oder alle der ein oder mehreren Aromastoff(e) enthält,
wobei das Aromakonzentrat eine Wasserphase und eine Ölphase umfasst, die den, einen, mehrere oder alle der ein oder mehreren Aromastoff(e) umfasst.

2. Verfahren nach Anspruch 1, wobei das Verfahren ferner den Schritt umfasst
e) Trennen der Ölphase um ein Aromaöl zu erhalten, das den, einen, mehrere oder alle der ein oder mehreren Aromastoff(e) enthält.

3. Verfahren nach Anspruch 2, wobei in Schritt e) ein Salz, vorzugsweise ein Salz, ausgewählt aus der Gruppe bestehend aus Calciumcarbonat, Natriumcarbonat, Kaliumcarbonat, Ammoniumcarbonat, Natriumchlorid, Kaliumchlorid, Calciumchlorid, Magnesiumchlorid, Zinn(II)chlorid, Natriumsulfat, Kaliumsulfat, Ammoniumsulfat, Aluminiumsulfat, Aluminiumnatriumsulfat, Aluminiumkaliumsulfat, Aluminiumammoniumsulfat, Kaliumacetat, Natriumacetat, Calciumacetat, Natriumpropionat, Calciumpropionat, Kaliumpropionat, Natriumlaktat, Kaliumlaktat, Kalziumlaktat, Natriumzitrat, Kaliumzitrat, Triammoniumzitrat, Natriumtartrat, Kaliumtartrat, Natriumkaliumtartrat, Natriumphosphat, Kaliumphosphat, Diphosphat (Na), Triphosphat (Na), Polyphosphat, Natriummalat, Kaliummalat, Natriumadipat, Kaliumadipat oder eine Kombination davon, dem Aromakonzentrat vor der Abtrennung der Ölphase zugesetzt wird, wobei die Menge des Salzes in einem Bereich von 10 bis 100 %, vorzugsweise in einem Bereich von 50 bis 90 % liegt, bezogen auf die theoretische Löslichkeit des/der jeweiligen Salzes/Salze in Wasser.

4. Verfahren nach Anspruch 2, wobei das Verfahren ferner den Schritt umfasst f) Zugeben eines Salzes, vorzugsweise eines Salzes aus der Gruppe bestehend aus Calciumcarbonat, Natriumcarbonat, Kaliumcarbonat, Ammoniumcarbonat, Natriumchlorid, Kaliumchlorid, Calciumchlorid, Magnesiumchlorid, Zinn(II)chlorid, Natriumsulfat, Kaliumsulfat, Ammoniumsulfat, Aluminiumsulfat, Aluminiumnatriumsulfat, Aluminiumkaliumsulfat, Aluminiumammoniumsulfat, Kaliumacetat, Natriumacetat, Calciumacetat, Natriumpropionat, Calciumpropionat, Kaliumpropionat, Natriumlaktat, Kaliumlaktat, Kalziumlaktat, Natriumzitrat, Kaliumzitrat, Triammoniumzitrat, Natriumtartrat, Kaliumtartrat, Natriumkaliumtartrat, Natriumphosphat, Kaliumphosphat, Diphosphat (Na), Triphosphat (Na), Polyphosphat, Natriummalat, Kaliummalat, Natriumadipat, Kaliumadipat oder eine Kombination davon,
zur Wasserphase nach Abtrennung der Ölphase in Schritt e), vorzugsweise wobei die Menge des Salzes in einem Bereich von 10 bis 100 %, vorzugsweise in einem Bereich von 50 bis 90 % liegt, bezogen auf die theoretische Löslichkeit des/der jeweiligen Salzes/Salze in Wasser.

5. Verfahren nach einem der vorhergehenden Ansprüche, wobei der Wasserdampffluss in Schritt c) bis zu 20 g/min, bezogen auf eine 2,0-Liter-Säule, beträgt, vorzugsweise in einem Bereich von 5 g/min bis 10 g/min, bezogen auf eine 2,0-Liter-Säule.

6. Verfahren nach einem der vorhergehenden Ansprüche, wobei in Schritt c) der Adsorber auf eine Temperatur im Bereich von 120 °C bis 150 °C, weiter bevorzugt im Bereich von 140 °C bis 150 °C erhitzt wird, bevor der Wasserdampf aufgebracht wird.

7. Verfahren nach einem der vorhergehenden Ansprüche, wobei der in Schritt c) aufgebrachte Wasserdampf eine Temperatur im Bereich von 120 °C bis 180 °C, vorzugsweise im Bereich von 130 °C bis 160 °C, weiter bevorzugt im Bereich von 150 °C bis 160 °C aufweist.

8. Verfahren nach einem der vorhergehenden Ansprüche, wobei der in Schritt c) aufgebrachte Wasserdampf eine Temperatur aufweist, die 5 bis 15 °C, vorzugsweise 7,5 bis 12,5 °C, besonders bevorzugt 10 °C höher ist als die Temperatur, auf die der Adsorber erwärmt wird, bevor der Wasserdampf aufgebracht wird.

9. Verfahren nach einem der vorhergehenden Ansprüche, wobei die Schritte c) bis d) oder, jeweils wo anwendbar, bis e) oder bis f) mindestens zweimal, mindestens dreimal, mindestens viermal, mindestens fünfmal, mindestens sechsmal, mindestens siebenmal, mindestens achtmal, mindestens neunmal, mindestens zehnmal oder mehr als zehnmal durchgeführt werden, um 2, 3, 4, 5, 6, 7, 8, 9 bzw. 10 oder mehr Aromakonzentrate bzw. Aromaöle zu erhalten.

10. Verfahren nach Anspruch 9, wobei sich die Temperatur, auf die der Adsorber in Schritt c) erhitzt wird, bevor der Wasserdampf aufgebracht wird, zwischen zwei, drei, vier oder mehr oder allen Durchführungen des Schritts c) unterscheidet.

11. Verfahren nach einem der Ansprüche 9 oder 10, wobei sich die Temperatur des in Schritt c) aufgebrachten Wasserdampfes zwischen zwei, drei, vier oder mehr oder allen Durchführungen des Schritts c) unterscheidet.

12. Verfahren nach einem der Ansprüche 9 bis 11, wobei sich der Wasserdampffluss in Schritt c) zwischen zwei, drei, vier oder mehr oder allen Durchführungen des Schritts c) unterscheidet.

13. Verfahren nach einem der vorhergehenden Ansprüche, wobei die in Schritt a) bereitgestellte, flüssige oder gasförmige Zusammensetzung pflanzlichen, tierischen oder pilzlichen Ursprungs ist oder eine Kombination aus Zusammensetzungen pflanzlichen und/odertierischen und/oder pilzlichen Ursprungs ist.

## Revendications

1. Procédé de fabrication d'un concentré d'arôme à partir d'une composition liquide, comprenant une ou plusieurs substance(s) aromatique(s), comprenant ou consistant en les étapes suivantes:
a) fournir une composition liquide ou gazeuse comprenant une ou plusieurs substance(s) aromatique(s),
b) ajouter la composition liquide ou gazeuse fournie à l'étape a) à un adsorbant pour adsorber la, une, plusieurs ou la totalité de ladite une ou desdites plusieurs substance(s) aromatique(s) de la composition liquide,
dans lequel l'adsorbant comprend ou consiste en une résine adsorbante, telle que du polystyrène réticulé avec du divinylbenzène, du polystyrène macropo-reux réticulé avec du divinylbenzène, du polystyrène, du polystyrène réticulé, de l'acrylate de méthyle aliphatique, de l'adsorbant microporeux à base de carbone, ou une combinaison de ceux-ci,
c) récupérer la, une, plusieurs ou la totalité de ladite une ou desdites plusieurs substance(s) aromatique(s) adsorbée(s) de l'adsorbant par désorption thermique,
dans lequel la désorption thermique comprend une étape d'application de vapeur d'eau à l'adsorbant, de préférence avec un flux de vapeur d'eau allant jusqu'à 50 g/min sur la base d'une colonne de 2,0 L, de préférence encore avec un flux de vapeur d'eau allant jusqu'à 20 g/min sur la base d'une colonne de 2,0 L,
dans lequel l'adsorbant est chauffé à une température se situant dans la plage allant de 110 °C à 170 °C avant que la vapeur d'eau soit appliquée,
d) condenser la vapeur d'eau appliquée à l'étape c) pour obtenir un concentré d'arôme comprenant la, une, plusieurs ou la totalité de ladite une ou desdites plusieurs substance(s) aromatique(s),
dans lequel le concentré d'arôme comprend une phase aqueuse et une phase huileuse, comprenant la, une, plusieurs ou la totalité de ladite une ou desdites plusieurs substance(s) aromatique(s).

2. Procédé selon la revendication 1, dans lequel le procédé comprend en outre l'étape consistant à
e) séparer la phase huileuse pour obtenir une huile aromatique comprenant la, une, plusieurs ou la totalité de ladite une ou desdites plusieurs substance(s) aromatique(s).

3. Procédé selon la revendication 2, dans lequel à l'étape e) un sel, de préférence un sel choisi dans le groupe constitué par le carbonate de calcium, le carbonate de sodium, le carbonate de potassium, le carbonate d'ammonium, le chlorure de sodium, le chlorure de potassium, le chlorure de calcium, le chlorure de magnésium, le chlorure d'étain(II), le sulfate de sodium, le sulfate de potassium, le sulfate d'ammonium, le sulfate d'aluminium, le sulfate d'aluminium et de sodium, le sulfate d'aluminium et de potassium, le sulfate d'aluminium et d'ammonium, l'acétate de potassium, l'acétate de sodium, l'acétate de calcium, le propionate de sodium, le propionate de calcium, le propionate de potassium, le lactate de sodium, le lactate de potassium, le lactate de calcium, le citrate de sodium, le citrate de potassium, le citrate de triammonium, le tartrate de sodium, le tartrate de potassium, le tartrate de sodium et de potassium, le phosphate de sodium, le phosphate de potassium, le diphosphate (Na), le triphosphate (Na), le polyphosphate, le malate de sodium, les malate de potassium, l'adipate de sodium, l'adipate de potassium, ou une combinaison de ceux-ci, est ajouté au concentré d'arôme avant la séparation de la phase huileuse, dans lequel la quantité du sel se situe dans une plage allant de 10 à 100 %, de préférence dans une plage allant de 50 à 90 %, sur la base de la solubilité théorique du ou des sel(s) respectif(s) dans l'eau.

4. Procédé selon la revendication 2, dans lequel le procédé comprend en outre l'étape consistant à
f) ajouter un sel, de préférence un sel choisi dans le groupe constitué par le carbonate de calcium, le carbonate de sodium, le carbonate de potassium, le carbonate d'ammonium, le chlorure de sodium, le chlorure de potassium, le chlorure de calcium, le chlorure de magnésium, le chlorure d'étain(II), le sulfate de sodium, le sulfate de potassium, le sulfate d'ammonium, le sulfate d'aluminium, le sulfate d'aluminium et de sodium, le sulfate d'aluminium et de potassium, le sulfate d'aluminium et d'ammonium, l'acétate de potassium, l'acétate de sodium, l'acétate de calcium, le propionate de sodium, le propionate de calcium, le propionate de potassium, le lactate de sodium, le lactate de potassium, le lactate de calcium, le citrate de sodium, le citrate de potassium, le citrate de triammonium, le tartrate de sodium, le tartrate de potassium, le tartrate de sodium et de potassium, le phosphate de sodium, le phosphate de potassium, le diphosphate (Na), le triphosphate (Na), le polyphosphate, le malate de sodium, le malate de potassium, l'adipate de sodium, l'adipate de potassium ou une combinaison de ceux-ci,
à la phase aqueuse, après avoir séparé la phase huileuse à l'étape e), de préférence dans lequel la quantité du sel se situe dans une plage allant de 10 à 100 %, de préférence dans une plage allant de 50 à 90 %, sur la base de la solubilité théorique du (des) sel(s) respectif(s) dans l'eau.

5. Procédé selon l'une quelconque des revendications précédentes, dans lequel le flux de vapeur d'eau à l'étape c) va jusqu'à 20 g/min, sur la base d'une colonne de 2,0 L, de préférence dans une plage allant de 5 g/min à 10 g/min., sur la base d'une colonne de 2,0 L.

6. Procédé selon l'une quelconque des revendications précédentes, dans lequel à l'étape c) l'adsorbant est chauffé à une température se situant dans la plage allant de 120 °C à 150 °C, de préférence encore dans la plage allant de 140 °C à 150 °C, avant que la vapeur d'eau soit appliquée.

7. Procédé selon l'une quelconque des revendications précédentes, dans lequel la vapeur d'eau appliquée à l'étape c) présente une température se situant dans la plage allant de 120 °C à 180 °C, de préférence dans la plage allant de 130 °C à 160 °C, plus préférablement dans la plage allant de 150 °C à 160 °C.

8. Procédé selon l'une quelconque des revendications précédentes, dans lequel la vapeur d'eau appliquée à l'étape c) présente une température allant de 5 à 15 °C, de préférence de 7,5 à 12,5 °C, de manière particulièrement préférée qui est de 10 °C supérieure à la température à laquelle l'adsorbant est chauffé avant que la vapeur d'eau soit appliquée.

9. Procédé selon l'une quelconque des revendications précédentes, dans lequel les étapes c) à d) ou, respectivement où applicable, à e) ou à f) sont mises en œuvre au moins 2 fois, au moins 3 fois, au moins 4 fois, au moins 5 fois, au moins 6 fois, au moins 7 fois, au moins 8 fois, au moins 9 fois, au moins 10 fois ou plus de 10 fois, pour obtenir 2, 3, 4, 5, 6, 7, 8, 9 ou bien 10 concentrés d'arômes ou bien huiles aromatiques ou plus.

10. Procédé selon la revendication 9, dans lequel la température à laquelle l'adsorbant est chauffé à l'étape c) avant que la vapeur d'eau soit appliquée varie entre deux, trois, quatre ou plus ou la totalité des mises en œuvre de l'étape c).

11. Procédé selon les revendications 9 ou 10, dans lequel la température de la vapeur d'eau appliquée à l'étape c) varie entre deux, trois, quatre ou plus ou la totalité des mises en œuvre de l'étape c).

12. Procédé selon l'une quelconque des revendications 9 à 11, dans lequel le flux de vapeur d'eau à l'étape c) varie entre deux, trois, quatre ou plus ou la totalité des mises en œuvre de l'étape c).

13. Procédé selon l'une quelconque des revendications précédentes, dans lequel la composition liquide ou gazeuse fournie à l'étape a) est d'origine végétale, animale ou fongique ou une combinaison de compositions d'origine végétale et/ou animale et/ou fongique.
